(19) Europäisches Patentamt
European Patent Office
Office européen des brevets

(11) **EP 3 328 925 B1**

(12) **EUROPÄISCHE PATENTSCHRIFT**

(45) Veröffentlichungstag und Bekanntmachung des Hinweises auf die Patenterteilung:
**22.05.2024   Patentblatt 2024/21**

(21) Anmeldenummer: **16739026.9**

(22) Anmeldetag: **13.07.2016**

(51) Internationale Patentklassifikation (IPC):
*C08K 3/013* (2018.01)    *C08K 3/22* (2006.01)
*C08K 5/00* (2006.01)    *C08K 7/18* (2006.01)
*C08K 9/02* (2006.01)

(52) Gemeinsame Patentklassifikation (CPC):
(C-Sets verfügbar)
**C08K 3/013; C08K 3/22; C08K 5/0041; C08K 7/18; C08K 9/02;** C08K 2003/2241        (Forts.)

(86) Internationale Anmeldenummer:
**PCT/EP2016/001206**

(87) Internationale Veröffentlichungsnummer:
**WO 2017/016645 (02.02.2017 Gazette 2017/05)**

(54) **LASERMARKIERBARE POLYMERE UND BESCHICHTUNGEN**

LASER-MARKABLE POLYMERS AND COATINGS

POLYMÈRES ET REVÊTEMENTS POUVANT ÊTRE MARQUÉS AU LASER

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.07.2015   DE 102015009544**
**04.08.2015   DE 102015009854**

(43) Veröffentlichungstag der Anmeldung:
**06.06.2018   Patentblatt 2018/23**

(73) Patentinhaber: **Merck Patent GmbH**
**64293 Darmstadt (DE)**

(72) Erfinder:
• **KNIESS, Helge, Bettina**
**64380 Roßdorf (DE)**
• **QUITTMANN, Ulrich**
**65439 Floersheim (DE)**

• **ROSENBERGER, Silvia**
**55294 Bodenheim (DE)**

(74) Vertreter: **Merck Patent Association**
**Merck Patent GmbH**
**64271 Darmstadt (DE)**

(56) Entgegenhaltungen:
**WO-A1-2014/042283      DE-A1-102013 007 750**

(52) Gemeinsame Patentklassifikation (CPC): (Forts.)

C-Sets
**C08K 3/013, C08L 101/00;**
**C08K 3/22, C08L 101/00;**
**C08K 5/0041, C08L 101/00;**
**C08K 7/18, C08L 101/00;**
**C08K 9/02, C08L 101/00**

**Beschreibung**

Die vorliegende Erfindung betrifft lasermarkierbare Polymere und Beschichtungen, die sich dadurch auszeichnen, dass sie als Laseradditiv mit Zinn/Antimonoxid beschichtete sphärische $TiO_2$-Partikel definierter Teilchengröße enthalten.

Die Kennzeichnung von Produktionsgütern wird in fast allen Industriezweigen zunehmend wichtiger. So müssen häufig z. B. Produktionsdaten, Chargennummern, Verfallsdaten, Barcodes, 2D-Codes, Firmenlogos, Seriennummern, auf Kunststoffteilen aufgebracht werden. Wachsende Bedeutung gewinnt dabei die berührungslose, sehr schnelle und flexible Markierung mit Lasern. Mit dieser Technik ist es möglich Beschriftungen mit hoher Geschwindigkeit auch auf eine nicht plane Oberfläche aufzubringen. Da sich die Beschriftung im Kunststoffkörper oder in der polymeren Beschichtung selbst befindet, ist sie dauerhaft abriebbeständig.

Da viele Kunststoffe und polymere Beschichtungen für Laserlicht durchlässig sind, werden den Kunststoffen und polymeren Materialien meist lasersensitive Mittel zugesetzt, die durch Absorption der Laserenergie im Kunststoffmaterial entweder direkt durch Wechselwirkung mit dem Polymer oder der polymeren Beschichtung oder indirekt mit einem zugesetzten Material eine lokale, gut sichtbare Verfärbung hervorrufen. Das lasersensitive Mittel kann ein organischer Farbstoff oder ein Pigment sein, welches das Laserlicht absorbiert. Für die Verfärbung kann es verschiedene Ursachen geben, z. B. die Zersetzung des Polymeren oder der Absorber selbst wird von einer unsichtbaren in eine sichtbare Form umgewandelt. In der Regel kommt es zu einer Dunkelfärbung des Kunststoffs durch Carbonisierung in Folge der eingetragenen Laserenergie.

Es sind bereits zahlreiche Laseradditive (Absorber) für die Lasermarkierung von Kunststoffen und polymere Materialien bekannt. Für die Markierung mit Nd-YAG-Lasern (Neodym-dotierte Yttrium-Aluminium-Granat-Laser), $YVO_4$-Lasern (Yttrium-Vanadat-Laser) und 1064 nm-Faserlasern eignen sich vorzugsweise Materialien, die Licht der Wellenlänge 1064 nm absorbieren und selbst nur eine geringe Eigenfarbe aufweisen. Beispiele sind Kupferphosphate, Bismutoxid, Bismutoxichlorid, mit Antimon dotiertes Zinnoxid auf Glimmer oder Metalle.

In der EP 1 377 522 A2 werden beispielsweise Additive für die Lasermarkierung von Kunststoffen beschrieben, die aus einem kalziniertem Antimon-Zinn-Mischoxid bestehen, in welchem die Antimonkonzentration an der Oberfläche höher ist als in den Teilchen als Ganzes. Die Teilchengröße beträgt 0,1- 10 μm, vorzugsweise 0,5 -5 μm. Mit dem Additiv werden in der überwiegenden Zahl der Polymere dunkle Lasermarkierungen erhalten. Diese Additive haben aber den Nachteil, dass sie nur eine polymerabhängige Markierung zeigen und damit sehr langsam für den Markierprozess sind. Aus der DE 10 2013 007 750 A1 und WO 2014/042283 A1 sind Additive für Laser-Direktstrukturierungsverfahren (LDS) bekannt.

Problematisch ist, dass auf bunten oder hell eingefärbten Kunststoffteilen Lasermarkierungen nur sehr schwer zu erkennen sind. Beispiele für helle oder bunte Kunststoffteile sind Kabelisolierungen, Tastaturen oder gefärbte Kappendeckel, Rohrleitungen oder Gehäusematerialien. Hier ist eine dunkle, möglichst schwarze Beschriftung gewünscht, weil diese vor dem bunten Hintergrund wesentlich kontrastreicher erscheint als eine graue Markierung. Dunkle Markierungen können durch Verbrennen von Kunststoffen (Carbonisierung) mittels Laserbestrahlung erzeugt werden. Dies ist aber auf wenige Polymertypen beschränkt und führt meist zu einer Veränderung der Oberfläche durch die Aufrauung. Dies bewirkt u.a. bei dünnen Schichten und Folien den Verlust der mechanischen Festigkeit.

Es besteht daher weiterhin ein Bedarf an Laseradditiven, die insbesondere auf farbigen Untergründen und in dünnen Beschichtungen oder Folien durch Laserbeschuss zu einer dunklen, polymerunabhängigen, glatten und schnellen Markierung führen, welche dauerhaft ist und auch unter mechanischer Belastung über einen langen Zeitraum erhalten bleibt.

Aufgabe der vorliegenden Erfindung ist es daher ein Verfahren zur Erzeugung von kontrastreichen und mechanisch stabilen dunklen Markierungen, insbesondere auf weißen oder bunten Kunststoffgegenständen oder in weißen, hellen oder bunten Beschichtungen und Folien, zu finden. Eine weitere Aufgabe der Erfindung besteht darin, ein Laserpigment oder -additiv für die Lasermarkierung bereit zu stellen, das keine oder nur eine geringe Eigenfarbe aufweist und unter Einwirkung von Laserlicht im damit dotierten Polymer oder der polymeren Beschichtung sehr gute Markierergebnisse, insbesondere kontrastreiche und scharfe dunkle Markierungen liefert und in einer breiten Palette von Kunststoffen eingesetzt werden kann.

Eine weitere Aufgabe der vorliegenden Erfindung ist es, ein Verfahren zur Herstellung eines solchen Laseradditivs zur Verfügung zu stellen.

Überraschenderweise wurde gefunden, dass gefärbte Kunststoffgegenstände und Polymerschichten sich durch Laserbeschuss dunkel markieren lassen, wenn der Kunststoff bzw. das Polymer als Laseradditiv feinteiliges Titandioxid mit einer Zinn/Antimon-Oxid-Beschichtung enthält. Mit Hilfe des erfindungsgemäßen Laseradditivs ist es möglich auch Kunststoffgegenstände oder Polymerschichten, die in der Regel nicht mit einem Laseradditiv reagieren, durch Laserbeschuss dunkel zu markieren. Hierzu zählt u.a. Silikon, das keine Carbonisierung zeigen kann. Aber auch Polymere, die sonst nur sehr langsam auf das Laserlicht reagieren und sich auch nur schwer carbonisieren lassen, wie z.B. PA, PE, PP, PMMA, POM, werden mit Hilfe des erfindungsgemäßen Additivs schnell und kontrastreich markiert.

Gegenstand der Erfindung sind daher gemäß Anspruch 1 lasermarkierbare Polymere und Beschichtungen, dadurch gekennzeichnet, dass sie als Laserpigment oder -additiv sphärische $TiO_2$-Partikel enthalten, wobei die $TiO_2$-Partikel auf der Oberfläche mit einer mit Antimon dotierten Zinndioxidschicht $(Sn,Sb)O_2$ belegt sind und das Laserpigment eine Anzahl-gewichtete Teilchengröße von < 15 $\mu$m, gemessen am $D_{95}$ mittels Laserbeugung aufweist. Hierbei wirkt die mit Antimon dotierte Zinndioxidschicht $(Sn,Sb)O_2$ als Absorber der Laserenergie. Unter Laserbeschuss wird das $TiO_2$ des Laseradditivs zu $Ti_xO_y$ reduziert, welches sich durch eine dunkle Farbe auszeichnet.

Für die Wirkung des erfindungsgemäßen Laserpigments ist neben der chemischen Zusammensetzung insbesondere die Partikelgrößenverteilung von Bedeutung. Das Laserpigment besitzt eine sehr enge Partikelgrößenverteilung, wodurch es möglich ist neben der dunklen Markierung im Vergleich zum Stand der Technik die Kantenschärfe zu erhöhen.

Weiterhin kann auch die Teilchengröße der sphärischen $TiO_2$-Partikel das Markierungsergebnis beeinflussen. Kontrastreiche dunkle Markierungen mit hoher Kantenschärfe werden vorzugsweise dann erhalten, wenn der Durchmesser der $TiO_2$-Kugeln 0,05-10 $\mu$m, vorzugsweise 0,1-2 $\mu$m und insbesondere 0,15-1 $\mu$m, beträgt. Geeignete $TiO_2$-Partikel sind kommerziell erhältlich, z.B. unter den Markennamen Kronos (Fa. Kronos), Hombitec (Fa. Sachtleben).

Randscharfe Markierungen werden erhalten, wenn die massengewichtete Teilchengröße der Pigmente 4 $\mu$m oder weniger beträgt, gemessen am $D_{95}$ mittels Laserbeugung.

Erfindungsgemäße Additive besitzen einen D25-Wert von $\geq$ 0,15 $\mu$m.

Der $D_{50}$-Wert der erfindungsgemäßen Additive beträgt 0,15 - 1 $\mu$m.

Die Teilchengröße des Laseradditivs wird in dieser Anmeldung mittels Laserbeugung (Malvern Mastersizer 2000) bestimmt.

Besonders geeignete Laseradditive zeichnen sich dadurch aus, dass sie einen spezifischen Pulverwiderstand von vorzugsweise < 100 Ohm*cm aufweisen.

Der spezifische Pulverwiderstand wird in dieser Patentanmeldung wie folgt bestimmt. In einem Acrylglasrohr mit einem Durchmesser d werden 1,5 g Additiv mit Hilfe eines Gewichtes von 10 kg zwischen zwei Metallstempeln komprimiert und der auftretende elektrische Widerstand R gemessen. Aus der Schichtdicke L des komprimierten Additivs (entspricht dem Abstand der Metallstempel) ergibt sich der spezifische Pulverwiderstand gemäß

$$\rho = R \cdot \frac{\pi \cdot \left(\frac{d}{2}\right)^2}{L} \ [\Omega \cdot cm].$$

Die sphärischen $TiO_2$-Partikel werden auf der Oberfläche mit einer Zinndioxidschicht belegt, die mit Antimon dotiert ist. Die Dotierung beträgt 0,1 - 60 Mol%, vorzugsweise 1 - 40 Mol%, insbesondere 2 - 30 Mol%, bezogen auf das $SnO_2$.

Der Anteil der $(Sn,Sb)O_2$-Beschichtung bezogen auf das Additiv beträgt vorzugsweise 0,1 - 99 Gew.%, insbesondere 5 - 80 Gew.% und ganz besonders bevorzugt 10 - 70 Gew.%.

Wesentliche Merkmale für die Eignung des erfindungsgemäßen Laseradditivs sind die helle Eigenfarbe in den Kunststoff- und Beschichtungsanwendungen.

Die Einsatzkonzentration des erfindungsgemäßen Additivs für die Lasermarkierung beträgt 0,005 - 30 %, vorzugsweise 0,015 - 20 % und ganz besonders bevorzugt von 0,1 - 15 %, bezogen auf das zu markierende Polymer oder Beschichtungsmaterial. Aufgrund der geringen Eigenfarbe des Additivs werden die koloristischen Eigenschaften der Kunststoffartikel unwesentlich oder nur im geringen Maße durch das Additiv beeinträchtigt.

Unter Einwirkung von Laserlicht zeigt das dotierte Polymer eine dunkle Markierung mit hohem Kontrast und ausgeprägter Kantenschärfe. Das bei anderen Verfahren zur dunklen Markierung auftretende Aufschäumen und die damit einhergehende Aufrauung der Oberfläche wird nicht beobachtet.

Neben den hervorragenden optischen Eigenschaften, Kontrast und Kantenschärfe, ermöglichen die erfindungsgemäßen Laseradditive schnelle Markierungen mit hohen Pulsraten und verfügen über ein großes Prozessfenster bezogen auf die Lasereinstellungen. Über die Einstellung der Laserparameter lässt sich darüber hinaus die Helligkeit der Markierung bis hin zu tief dunklen Markierungen gezielt steuern. Allein über die Steuerung der Laserparameter (Leistung, Belichtungsdauer, Fokus) sind detailreiche farbige Halbtonbilder zugänglich. Das Verfahren zur Bilderzeugung ist ebenfalls Gegenstand der Erfindung.

Die Herstellung des erfindungsgemäßen Additivs ist relativ einfach und kann nach an sich bekannten Verfahren erfolgen. Die sphärischen $TiO_2$-Partikel werden mit einer Antimon-dotierten Zinndioxid-Schicht belegt. Die Belegung erfolgt vorzugweise in der Weise, dass die $TiO_2$-Kugeln in Wasser suspendiert werden und die Metalloxide bzw. Metalloxidhydrate bei einem geeigneten pH-Wert aufgefällt werden und die Hydroxide bzw. Oxidhydrate in die Metalloxide überführt werden. Dabei werden in der Regel Metallsalze des Antimons bzw. des Zinns, wie z.B. $SnCl_4$ oder $SbCl_3$, in gelöster Form der wässrigen Suspension zugegeben und bei einem geeigneten pH-Wert in der Regel in Form der Metalloxidhydrate zur Ausfällung gebracht. Anschließend werden die Metalloxidhydrate durch Behandlung bei erhöhten Temperaturen in die entsprechenden Oxide überführt. Das erhaltene Produkt wird abfiltriert, gewaschen, getrocknet, geglüht und zuletzt gesiebt.

Die Kombination aus Titandioxid und der $(Sn,Sb)O_2$-Schicht wirkt sich in mehrfacher Hinsicht vorteilhaft aus. Das enthaltene $(Sn,Sb)O_2$ bewirkt eine signifikante Absorption des Laserlichtes, auch bei sehr kleinen Teilchen. Dadurch sind die erfindungsgemäßen Laseradditive schon in sehr geringer Konzentration als Additiv für die Lasermarkierung wirksam. Die sehr feine Partikelgröße begünstigt die Ausbildung einer dunklen Markierung. Das erfindungsgemäße Produkt zeigt eine enge Partikelgrößenverteilung, gute Dispergierbarkeit, geringe Abrasivität, eine hohe Helligkeit und Transparenz.

Die Einbringung des Laseradditivs in den Kunststoff oder das Polymer kann analog zu den industrieüblichen Verfahren erfolgen, z.B. als trockene Pigmentmischung, als flüssige Präparation oder Paste oder über ein Konzentrat auf Kunststoff- oder Wachsbasis, ein sogenanntes Masterbatch. Auch die Einbringung des erfindungsgemäßen Laseradditivs über die Extrusion eines Compounds ist möglich. Dieses unterscheidet sich zum Masterbatch dadurch, dass es in der folgenden Verarbeitung ohne weitere Verdünnung eingesetzt wird, da es die gewünschten Additive bereits in der Endkonzentration im gewünschten Kunststoff enthält. Neben den laseraktiven Pigmenten können dabei bei allen genannten Additivierungsverfahren auch farbgebende Pigmente und weitere Zuschlagsstoffe zugegeben werden.

In der vorteilhaften Ausführungsform wird zunächst ein Masterbatch des Kunststoffs mit einer höheren Konzentration des erfindungsgemäßen Laseradditivs hergestellt und dieser dann als Granulat in geringer Menge der Hauptmasse des Kunststoffes bei der Kunststoffverarbeitung zugesetzt.

Ferner können den Polymeren Farbmittel zugesetzt werden, die eine breite farbliche Variation zulassen, besonders in den Farben Rot, Grün und Blau. Geeignete Farbmittel sind insbesondere organische Pigmente und Farbstoffe.

Als polymere Materialien können insbesondere alle bekannten Kunststoffe, insbesondere Thermoplasten, ferner Duroplasten und Elastomere, geeignet, die z.B. im Ullmann, Bd. 15, S. 457 ff., Verlag VCH beschrieben werden, für die Lasermarkierung Anwendung finden. Geeignete thermoplastische Polymere sind z.B. Polyethylen, Polypropylen, Polyamide, Polyester, Polyetherester, Polyphenylenether, Polyacetal, Polybutylenterephthalat (PBT), Polyethylenterephthalat (PET), Polymethylmethacrylat, Polyvinylacetal, Polystyrol, Acrylnitril-Butadien-Styrol (ABS), Acrylnitril-Styrol-Acrylester (ASA), Styrol-Acrylnitril (SAN), Polycarbonat, Polyethersulfone und Polyetherketone sowie deren Copolymeren, Mischungen, und/oder Polymerblends, wie z.B. PC/ABS, MABS.

Geeignete duroplastische Polymere sind z.B. Polyurethan, Melaminharze, Polyester und Epoxydharze.

Die Einarbeitung des erfindungsgemäßen Laseradditivs kann z.B. durch Compoundierung, über ein Masterbatch, über Pasten oder durch die direkte Zugabe beim formgebenden Verarbeitungsschritt (Direktpigmentierung) erfolgen. Dem Polymeren, vorzugsweise einem Kunststoffgranulat oder -pulver, können bei der Einarbeitung des Laseradditivs gegebenenfalls weitere Additive wie Prozesshilfsmittel, Stabilisatoren, Flammschutzmittel, Füllstoffe und farbgebende Pigmente zugegeben werden. Die laborgemäße Herstellung der dotierten Kunststoffgranulate oder -pulver erfolgt in der Regel so, dass in einem geeigneten Mischer das Kunststoffgranulat vorgelegt, mit Dispergierhilfen benetzt und danach das Laseradditiv und erforderliche Farbpigmente zugesetzt und untergemischt werden. In der industriellen Praxis erfolgt die Einfärbung und Additivierung des Polymeren in der Regel über ein Farbkonzentrat (Masterbatch) oder Compound. Dazu werden Farbpigmente und Additive unter hoher Scherung in Extrudern (üblicherweise gleichsinnig drehende Doppelschneckenextruder) in dem geschmolzenen Kunststoff dispergiert. Die Kunststoffschmelze tritt durch eine Lochplatte am Extruderkopf aus und wird durch geeignete Folgeeinrichtungen (z.B. Strangabschlagverfahren oder Unterwassergranulierung) zu Granulat verarbeitet. Das so erhaltene Granulat kann direkt in einem Extruder oder einer Spritzgießmaschine weiterverarbeitet werden. Die bei der Verarbeitung gebildeten Formkörper zeigen eine sehr homogene Verteilung des Laseradditivs. Anschließend findet die Lasermarkierung mit einem geeigneten Laser statt.

Bei farbigen oder weißen lasermarkierbaren Polymeren bzw. Kunststoffen enthält das Polymer oder der Kunststoff neben dem erfindungsgemäßen Laseradditiv ein oder mehrere Farbmittel. Ohne ein Farbmittel ist der Kunststoff transparent bis opak. Auch ohne Farbmittel werden in Gegenwart des erfindungsgemäßen Laseradditivs dunkle Markierungen im Polymer erhalten.

Die Konzentration des Laseradditivs im Polymeren, vorzugsweise Thermoplasten, Duroplasten, Elastomeren, ist in der Regel abhängig von dem eingesetzten Polymermaterial.

Die Einsatzkonzentration des erfindungsgemäßen Additivs für die Lasermarkierung beträgt vorzugsweise 0,01 - 30 %, insbesondere 0,015 - 20 %, und ganz besonders bevorzugt 0,1 - 15 %, bezogen auf den Kunststoff bzw. die Beschichtung. Wegen seiner hellen Eigenfarbe des erfindungsgemäßen Laserpigments werden die optischen Eigenschaften des markierten Kunststoffs bzw. Polymers nur im geringen Maße durch das Laseradditiv beeinträchtigt. Der geringe Anteil an Laseradditiv verändert das Polymersystem unwesentlich und beeinflusst auch nicht dessen Verarbeitbarkeit.

Unter Einwirkung von Laserlicht zeigt das erfindungsgemäße Additiv im Polymer eine dunkle Markierung mit hohem Kontrast und ausgeprägter Kantenschärfe. Das bei anderen Verfahren zur dunklen Markierung auftretende Aufschäumen und die damit einhergehende Aufrauung der Oberfläche werden nicht beobachtet.

Gegenstand der Erfindung ist auch ein Verfahren zur Herstellung der erfindungsgemäßen dotierten polymeren Materialien, dadurch gekennzeichnet, dass ein polymeres Material mit dem erfindungsgemäßen Laseradditiv gemischt und dann unter Wärmeeinwirkung verformt wird.

Die Beschriftung des Polymeren mit dem Laser erfolgt derart, dass der Probenkörper in den Strahlengang eines gepulsten Lasers, vorzugsweise eines Nd:YAG-Lasers gebracht wird. Ferner ist eine Beschriftung mit einem Excimer-Laser möglich. Jedoch sind auch mit anderen herkömmlichen Lasertypen gute bis sehr gute Markierergebnisse möglich, die eine Wellenlänge in einem Bereich hoher Absorption bzw. Reaktivität des verwendeten Pigments aufweisen. Die erhaltene Markierung wird durch die Bestrahlungszeit (bzw. Pulszahl bei Pulslasern) und Bestrahlungsleistung des Lasers sowie des verwendeten Kunststoffsystems bestimmt. Die Leistung der verwendeten Laser hängt von der jeweiligen Anwendung ab und kann im Einzelfall vom Fachmann ohne weiteres ermittelt werden.

Der verwendete Laser hat im Allgemeinen eine Wellenlänge im Bereich von 157 nm bis 10,6 $\mu$m, vorzugsweise im Bereich von 532 nm bis 10,6 $\mu$m. Beispielsweise seien hier $CO_2$-Laser (10,6 $\mu$m) und Nd:YAG-Laser (1064 bzw. 532 nm) oder UV-Laser erwähnt. Die Excimerlaser weisen folgende Wellenlängen auf: $F_2$-Excimerlaser (157 nm), ArF-Excimerlaser (193 nm), KrCl-Excimerlaser (222 nm), KrF-Excimerlaser (248 nm), Xe-Cl-Excimerlaser (308 nm), XeF-Excimerlaser (351 nm), frequenzvervielfachte Nd:YAG-Laser mit Wellenlängen von 355 nm (frequenzverdreifacht) oder 265 nm (frequenzvervierfacht). Besonders bevorzugt werden Nd:YAG-Laser (1064 bzw. 532 nm), Faser laser (1060-1070 nm) oder Dioden-Laser (940-980 nm) eingesetzt. Die Energiedichten der eingesetzten Laser liegen im Allgemeinen im Bereich von 1 J/cm$^2$ bis 2000 J/cm$^2$, vorzugsweise 10 J/cm$^2$ bis 2000 J/cm$^2$. Bei der Verwendung von gepulsten Lasern liegt die Pulsfrequenz im Allgemeinen im Bereich von 1 bis 100 kHz. Entsprechende Laser, die im erfindungsgemäßen Verfahren eingesetzt werden können, sind kommerziell erhältlich.

Die Verwendung der erfindungsgemäß dotierten Polymeren und Beschichtungen kann auf allen Gebieten erfolgen, wo bisher übliche Druckverfahren zur Beschriftung eingesetzt werden. Beispielsweise können Formmassen, Halbzeuge und Fertigteile aus dem erfindungsgemäßen Polymeren in der Elektro-, Elektronik- und Kraftfahrzeugindustrie Anwendung finden. Die Kennzeichnung und Beschriftung von z.B. Kabeln, Leitungen, Zierleisten bzw. Funktionsteilen im Heizungs-, Lüftungs- und Kühlbereich oder Schalter, Stecker, Hebel und Griffe, die aus dem erfindungsgemäß dotiertem Polymeren bestehen, können selbst an schwer zugänglichen Stellen mit Hilfe von Laserlicht markiert werden.

Weiterhin kann das erfindungsgemäße Polymersystem bei Verpackungen im Lebensmittelbereich oder im Spielzeugbereich eingesetzt werden. Die Markierungen auf den Verpackungen zeichnen sich dadurch aus, dass sie wisch- und kratzfest, stabil bei nachträglichen Sterilisationsprozessen, und hygienisch rein beim Markierungsprozess aufbringbar sind. Komplette Etikettenbilder können dauerhaft auf die Verpackung für ein Mehrwegsystem aufgebracht werden. Weiterhin findet das erfindungsgemäße Polymersystem Anwendung in der Medizintechnik, beispielsweise bei der Markierung von Petrischalen, Microtiterplatten, Kathedern, Einmalspritzen, Ampullen, Probenbehälter, Versorgungsschläuche und medizinische Auffangbeutel bzw. Vorratsbeutel.

Ein weiteres wichtiges Anwendungsgebiet für die Laserbeschriftung sind Kunststoffmarken zur individuellen Kennzeichnung von Tieren, sogenannte Cattle Tags oder Ohrmarken. Über ein Barcodesystem werden die Informationen gespeichert, welche spezifisch dem Tier zugehörig sind. Diese können bei Bedarf wieder mit Hilfe eines Scanners abgerufen werden. Die Beschriftung muss sehr dauerhaft werden, da die Ohrmarken teilweise über mehrere Jahre an den Tieren verbleiben.

Die Lasermarkierung von Formmassen, Halbzeugen und Fertigteilen, die aus dem erfindungsgemäßen Polymer bestehen, ist somit möglich.

Die folgenden Beispiele sollen die Erfindung erläutern ohne sie jedoch zu begrenzen. Die angegebenen Prozentangaben sind Gewichtsprozent. Alle $D_{25}$-, $D_{50}$- und $D_{95}$-Werte in dieser Anmeldung werden mittels Laserbeugung mit dem Gerät Malvern Mastersizer 2000 bestimmt.

### Beispiele

Beispiel 1

100 g sphärisches $TiO_2$ (Kronos 2900, Fa. KRONOS Inc.) mit einem Durchmesser $D_{95}$ 700-900 nm (gemessen mit einem Messinstrument der Firma Malvern Ltd., UK, Malvern 2000) werden in 2 l entmineralisiertem Wasser unter Rühren auf 75 °C erhitzt. Der pH-Wert der Suspension wird mit einer 10 %-igen Salzsäure auf einen Wert von 2,0 eingestellt. Anschließend wird eine salzsaure Zinn-Antimonchlorid-Lösung bestehend aus 264,5 g einer 50 %-igen $SnCl_4$-Lösung, 60,4 g einer 35 %-igen $SbCl_3$-Lösung und 440 g einer 10 %-igen Salzsäure langsam zudosiert, wobei der pH-Wert der Suspension durch gleichzeitige Zugabe einer 32 %-igen Natronlauge konstant gehalten wird. Nach vollständiger Zugabe wird noch 15 min. nachgerührt. Anschließend wird der pH-Wert durch Zugabe von 32 %-iger Natronlauge auf einen Wert von 3,0 eingestellt und weitere 30 min. nachgerührt.

Das Produkt wird abfiltriert, gewaschen, getrocknet, bei einer Temperatur von 500-900 °C 30 min. geglüht und durch ein 100 $\mu$m Sieb gesiebt.

### Anwendungsbeispiele

Beispiel A1 - Lasermarkierung von Kunststoffen

1 kg PP-Granulat (Metocene 648T, Fa. Basell) werden mit 2 g Dispergierhilfe (Process-Aid 24, Fa. Colormatrix) im Trommelmischer benetzt. Anschließend werden 3 g des Laseradditivs aus Beispiel 1, 1 g organisches gelbes Pigment (PV-Echtgelb HG, Fa. Clariant) und 0,25 g organisches grünes Farbpigment (PV Fast Echtgrün GNX, Fa. Clariant) zugegeben und 2 min im Trommelmischer untergemischt. Die erhaltene Mischung wird im gleichsinnig drehenden Doppelschneckenextruder unter hoher Scherung bei 200-220 °C Manteltemperatur compoundiert, durch eine Lochdüse zu einem Strang geformt, im Wasserbad abgekühlt und durch ein rotierendes Messer granuliert. Der erhaltene Compound wird auf einer Spritzgussmaschine zu Plättchen mit den Abmessungen 60 mm x 90 mm x 1,5 mm (BxHxT) verarbeitet. Die Kunststoffplättchen werden anschließend mit einem gepulsten $YVO_4$-Laser mit 1064 nm Wellenlänge und einer maximalen Ausgangsleistung von 10,5 W lasermarkiert. Das Testraster variiert die Geschwindigkeit zwischen 500 und 5000 mm/s und die Frequenz zwischen 20 und 100 kHz. Es werden gefüllte Flächen mit einem Linienabstand von 50 $\mu$m und darüber hinaus Linienschrift gelasert. Es werden stabile dunkle Lasermarkierungen bis zu einer Geschwindigkeit von 3000 mm/s erhalten. Die Linienmarkierung ist sehr definiert und detailgetreu. Die glatte Oberfläche der Markierung bestätigt die Reaktion des Additivs und weniger des umgebenden Polymers.

### Beispiel A2 - Lasermarkierung von Kunststoffen

3 g Additiv aus Beispiel 1 werden analog Beispiel A1 in PMMA eingearbeitet - statt organischen Farbpigmenten werden 2 g $TiO_2$ Kronos 2220 verwendet. Die Kunststoffplättchen werden anschließend mit einem gepulsten $YVO_4$-Laser mit 1064 nm Wellenlänge und einer maximalen Ausgangsleistung von 10,5 W lasermarkiert. Das Testraster variiert die Geschwindigkeit zwischen 500 und 5000 mm/s und die Frequenz zwischen 20 und 100 kHz. Es werden gefüllte Flächen mit einem Linienabstand von 50 $\mu$m und darüber hinaus Linienschrift gelasert. Es werden stabile dunkle Lasermarkierungen bis zu einer Geschwindigkeit von 5000 mm/s erreicht, das entspricht der maximalen Markiergeschwindigkeit des Lasers.

### Beispiel A3 - Lasermarkierung von Silikon

Liquid Silicone Rubber (LSR) ist ein Zweikomponenten System, das leicht unter Wärmeeinwirkung polymerisiert. Die beiden flüssigen Komponenten werden im Verhältnis 1:1 zum Silikon-Rubber gemischt. Im Beispiel wird ein LSR Type: KEG 2000/50 von Shin-Etsu verwendet. Dabei werden 6 g des Laseradditivs aus Beispiel 1 in 500 g von Komponente 1 des LSR geben und intensiv gemischt. Anschließend werden 500 g von Komponente 2 dazu geben und erneut intensiv vermischt. Diese flüssige Mischung wird in eine Form gegossen und zum Aushärten für 20 Minuten bei 180 °C in einen Laborofen gegeben. Nach dem Aushärten abkühlen lassen und analog zu Beispiel A1 lasermarkieren.

### Beispiel A4 - Lasermarkierung von Pulverlackbeschichtungen

560,5 g Crylcoat 2689-0 (Fa. Allnex), 29,5 g Primid XL-552 (Fa. Ems Chemie AG), 8,0 g BYK 364P (Fa. BYK-Chemie GmbH), 2,0 g Benzoin (Fa. DSM) und 400 g Kronos 2160 (Fa. Kronos Titan GmbH) und 60 g Additiv aus Beispiel 1 werden in einem Labormischer 5 min intensiv gemischt. Die erhaltene Mischung wird in einem geeigneten Extruder bei Temperaturen zwischen 70 und 100 °C extrudiert. Das erhaltene Extrudat wird gekühlt, gebrochen und gemahlen. Nach Zusatz von 2,0 g Aeroxide Alu C (Fa. Evonik) wird das Pulver mit einem Sieb, Maschenweite 125 $\mu$m gesiebt. Der erhaltene Pulverlack wird mittels Corona- oder Triboverfahren auf Prüfbleche appliziert und 10 min bei 180 °C (Objekttemperatur) eingebrannt.

Die Beschichtung auf den Prüfblechen wird analog zu Beispiel A1 und Beispiel A2 mit einem IR-Laser markiert.

### Patentansprüche

1. Lasermarkierbare Polymere und Beschichtungen, **dadurch gekennzeichnet, dass** sie als Laseradditiv sphärische $TiO_2$-Partikel enthalten, wobei die $TiO_2$-Partikel auf der Oberfläche mit einer mit Antimon dotierten Zinndioxidschicht $(Sn,Sb)O_2$ belegt sind und die $TiO_2$-Partikel einen $D_{25}$-Wert von $\geq 0,15$ $\mu$m, einen $D_{50}$-Wert von 0,15-1 $\mu$m, eine Anzahlgewichtete Teilchengröße von $\leq 4$ $\mu$m, gemessen am $D_{95}$ mittels Laserbeugung aufweisen und das Polymer ein Thermoplast, Duroplast, Elastomer oder Silikon ist, und das Polymer zusätzlich ein oder mehrere Farbpigmente und/oder Farbstoffe enthält und der Gehalt an Antimon in der Zinndioxidschicht des Additivs 0,1 - 60 Mol% bezogen auf das Zinndioxid beträgt.

2. Lasermarkierbare Polymere und Beschichtungen nach Anspruch 1, **dadurch gekennzeichnet, dass** das Laseradditiv in Konzentrationen von 0,005 bis 30 Gew.% bezogen auf das zu markierende Polymer oder Beschichtungsmaterial eingesetzt wird.

3. Lasermarkierbare Polymere und Beschichtungen nach Anspruch 1 oder 2, **dadurch gekennzeichnet, dass** das Laseradditiviv einen spezifischen Pulverwiderstand von < 100 Ohm * cm aufweist, wobei der spezifische Pulverwiderstand wie folgt bestimmt wird:
   In einem Acrylglasrohr mit einem Durchmesser d werden 1,5 g Additiv mit Hilfe eines Gewichtes von 10 kg zwischen zwei Metallstempeln komprimiert und der auftretende elektrische Widerstand R gemessen. Aus der Schichtdicke L des komprimierten Additivs (entspricht dem Abstand der Metallstempel) ergibt sich der spezifische Pulverwiderstand gemäß

$$\rho = R \cdot \frac{\pi \cdot \left(\frac{d}{2}\right)^2}{L} \ [\Omega \cdot cm]$$ .

4. Verfahren zur Herstellung von lasermarkierbaren Polymeren und Beschichtungen nach einem oder mehreren der Ansprüche 1 bis 3, **dadurch gekennzeichnet, dass** die Zugabe des Laseradditivs durch Compoundierung, über ein Masterbatch oder über Pasten oder durch die direkte Zugabe dem Polymer gleichzeitig oder nacheinander erfolgt und gegebenenfalls eine oder mehrere Additive zugesetzt werden und dann das Polymer unter Wärmewirkung verformt wird.

5. Verwendung der lasermarkierbaren Polymere und Beschichtungen nach einem oder mehreren der Ansprüche 1 bis 3 als Material zur Herstellung von Formmassen, Halbzeugen, Fertigteilen und zur Bilderzeugung.

6. Formmassen, Halbzeuge, Fertigteile und Folien bestehend aus dem lasermarkierbaren Polymer nach einem oder mehreren der Ansprüche 1 bis 3.

7. Pulverlackbeschichtungen bestehend aus dem lasermarkierbaren Polymer nach einem oder mehreren der Ansprüche 1 bis 3.

**Claims**

1. Laser-markable polymers and coatings, **characterised in that** they comprise spherical $TiO_2$ particles as laser additive, where the $TiO_2$ particles are coated on the surface with an antimony-doped tin dioxide layer $(Sn,Sb)O_2$ and the $TiO_2$ particles have a $D_{25}$ value of $\geq 0.15$ μm, a $D_{50}$ value of 0.15-1 μm, a number-weighted particle size of $\leq 4$ μm, measured at the $D_{95}$ by means of laser diffraction, and the polymer is a thermoplastic, thermoset, elastomer or silicone, and the polymer additionally comprises one or more coloured pigments and/or dyes and the antimony content in the tin dioxide layer of the additive is 0.1 - 60 mol%, based on the tin dioxide.

2. Laser-markable polymers and coatings according to Claim 1, **characterised in that** the laser additive is employed in concentrations of 0.005 to 30% by weight, based on the polymer or coating material to be marked.

3. Laser-markable polymers and coatings according to Claim 1 or 2, **characterised in that** the laser additive has a specific powder resistance of < 100 ohm * cm, where the specific powder resistance is determined as follows:
1.5 g of additive are compressed between two metal rams with the aid of a 10 kg weight in an acrylic glass tube having a diameter d, and the electrical resistance R arising is measured; the specific powder resistance is obtained from the layer thickness L of the compressed additive (corresponds to the separation of the metal rams) in accordance with

$$\rho = R \cdot \frac{\pi \cdot \left(\frac{d}{2}\right)^2}{L} \ [\Omega \cdot cm]$$ .

4. Process for the preparation of laser-markable polymers and coatings according to one or more of Claims 1 to 3, **characterised in that** the addition of the laser additive is carried out simultaneously or successively by compounding, via a masterbatch or via pastes or by direct addition to the polymer, and optionally one or more additives are added and the polymer is then shaped under the action of heat.

5. Use of the laser-markable polymers and coatings according to one or more of Claims 1 to 3 as material for the production of moulding compositions, semi-finished products, finished parts and for the production of images.

6. Moulding compositions, semi-finished products, finished parts and films consisting of the laser-markable polymer according to one or more of Claims 1 to 3.

7. Powder coatings consisting of the laser-markable polymer according to one or more of Claims 1 to 3.

**Revendications**

1. Polymères et revêtements pouvant être marqués au laser, **caractérisés en ce qu'**ils comprennent des particules de $TiO_2$ sphériques en tant qu'additif pour laser, où les particules de $TiO_2$ sont déposées sur la surface avec une couche en dioxyde d'étain dopé à l'antimoine $(Sn, Sb)O_2$ et les particules de $TiO_2$ présentent une valeur de $D_{25} \geq 0,15$ μm, une valeur de $D_{50}$ de 0,15-1 μm, une taille de particules pondérée en nombre $\leq 4$ μm, tel que mesuré à $D_{95}$ par diffraction laser, et le polymère est un élastomère ou silicone thermoplastique thermdurcissable, et le polymère comprend de façon additionnelle un ou plusieurs pigments colorés et/ou colorants et la teneur en antimoine dans la couche en dioxyde d'étain de l'additif est de 0,1 - 60 % molaire, sur la base du dioxyde d'étain.

2. Polymères et revêtements pouvant être marqués au laser selon la revendication 1, **caractérisés en ce que** l'additif pour laser est utilisé selon des concentrations de 0,005 à 30 % en poids, sur la base du matériau de polymère ou de revêtement à marquer.

3. Polymères et revêtements pouvant être marqués au laser selon la revendication 1 ou 2, **caractérisés en ce que** l'additif pour laser présente une résistance de poudre spécifique < 100 ohm * cm, où la résistance de poudre spécifique est déterminée comme suit :

   1,5 g d'additif sont compactés par compression entre deux béliers en métal à l'aide d'un poids de 10 kg dans un tube en verre acrylique présentant un diamètre d, et la résistance électrique R en résultant est mesurée ; la résistance de poudre spécifique est obtenue à partir de l'épaisseur de couche L de l'additif compacté par compression (elle correspond à la séparation des béliers en métal) conformément à :

$$\rho = R \cdot \frac{\pi \cdot \left(\frac{d}{2}\right)^2}{L} \ [\Omega \cdot cm]$$

4. Procédé pour la préparation de polymères et revêtements pouvant être marqués au laser selon une ou plusieurs des revendications 1 à 3, **caractérisé en ce que** l'ajout de l'additif pour laser est mis en oeuvre simultanément ou successivement par mélange, via un mélange maître ou via des pâtes ou par ajout direct au polymère, et en option, un ou plusieurs additifs sont ajoutés et le polymère est ensuite mis en forme sous l'action de chaleur.

5. Utilisation de polymères et revêtements pouvant être marqués au laser selon une ou plusieurs des revendications 1 à 3 en tant que matériau pour la production de compositions de moulage, de produits semifinis, de pièces finies et pour la production d'images.

6. Compositions de moulage, produits semi-finis, pièces finies et films constitués par le polymère pouvant être marqué au laser selon une ou plusieurs des revendications 1 à 3.

7. Revêtements de poudre constitués par le polymère pouvant être marqué au laser selon une ou plusieurs des revendications 1 à 3.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1377522 A2
- DE 102013007750 A1
- WO 2014042283 A1